# EUROPEAN PATENT SPECIFICATION

(11) **EP 1 983 707 B1**
(45) Date of publication and mention of the grant of the patent: **05.08.2009**
(21) Application number: 06817856.5
(22) Date of filing: 20.11.2006
(51) Int. Cl.: H04L 12/58

(54) **A method and a system for reporting device capability update information**
Verfahren und System zur Meldung von Aktualisierungsinformationen der Fähigkeiten eines Gerätes
Procédé et système pour reporter des informations de mise à jour de la capacité d'un dispositf.

(30) Priority: 24.01.2006 CN 200610023602
(43) Date of publication of application: 22.10.2008
(73) Proprietor: Huawei Technologies Co., Ltd., Longgang District, Shenzhen Guangdong 518129 (CN)
(72) Inventor: ZHONG, Xueping, Guangdong 518129 (CN); TIAN, Linyi, Guangdong 518129 (CN); GU, Chong, Guangdong 518129 (CN)
(74) Representative: Hengelhaupt, Jürgen
(86) International application number: PCT/CN2006/003118
(87) International publication number: WO 2007/085164

(56) References cited:
- WO-A2-20/05027536
- CN-A- 1 201 944
- US-A1- 2002 138 545
- US-A1- 2003 162 540
- US-A1- 2004 043 763
- US-A1- 2004 185 885

## Description

### Field of the Invention

The present invention generally relates to the field of communication technology, and more particularly, to a method and system for reporting device capability update information.

### Background of the Invention

The rapid development of science and technology has brought enormous changes, especially those in the field of communications technology, to our work and lives. The gradual evolution from telegraph in the 19^{th} century to current third generation (3G) mobile communications leads to ever-increasing demands for mobility and information. People desire to rapidly access the Internet or Intranet, send and receive E-mails, do E-business, exchange files, facsimiles and other data anytime and anywhere as needed, thereby improving their social competence and gaining a more flexible life style.

In recent years, in order to meet various wireless services demands on wireless networks, user equipment (UE) capabilities have been continuously strengthened with the introduction of new services on wireless networks. The UEs may be a mobile phone, a laptop computer with a portable terminal, or a mobile communication device installed on a vehicle. Such devices may run various wireless services in conjunction with wireless access networks.

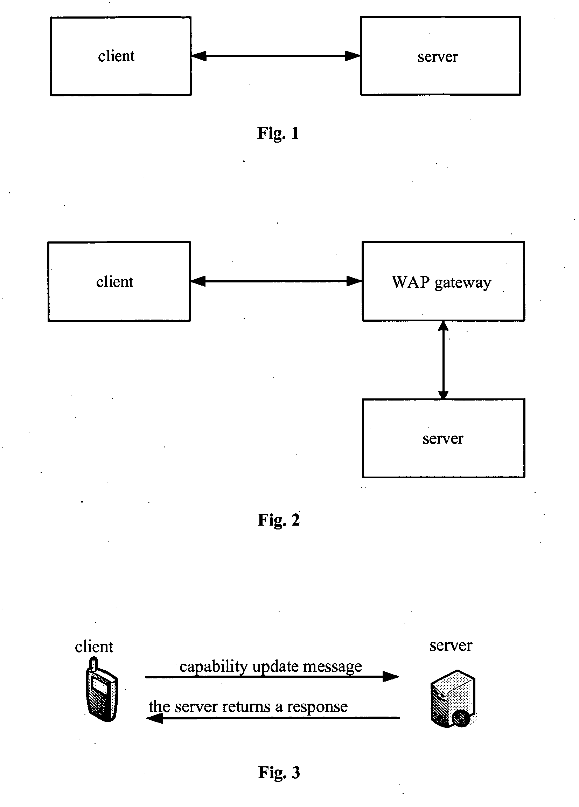

Fig. 1 and Fig. 2 show a wireless network providing services for UEs. The clients shown in Fig. 1 are devices containing a Personal Digital Assistant (PDA) supporting User Agent Profile (UAP), and the servers shown in Fig. 1 are devices containing an application server supporting UAP, such as a PUSH server, a WEB server, and the like. Fig. 2 differs from Fig. 1 in that it has a Wireless Application Protocol (WAP) gateway for implementing the conversions of various protocol stacks and content formats, such as the conversion between WAP protocol stack and WWW protocol stack, and the conversion of Wireless Markup Language (WML) to Hypertext Markup Language (HTML).

UAP mainly serves to adapt the contents of the client to those of the server. For example, if the client wishes to browse a web page, it needs to send its device capability information to the server. UAP properties include hardware platform information, software platform information, browser client, network characteristic and WAP characteristic, etc.

Hardware platform information refers to terminal hardware characteristic, such as terminal type, device model, display size, input and output mode, which, for example, indicate such information as screen size, bit per pixel, color, text input capability support, image capability support, keyboard availability, and the like. Software platform information refers to terminal software operating environments, including operating system, video and audio codec support, user language selection, which, for example, indicate such information as downloadable software support, character set support, and the like. Browser client refers to a group of properties describing HTML browsing application programs.

Network characteristic describes network-related structures and environments, such as network load information, and the like.

WAP characteristic describes WAP-related information supported by the client, such as WML browsing capability and property, and the like.

When initiating a session with the network, the client contains its own UAP-related information in a request message and sends it to the WAP gateway or the server. If the server can process the request message after receiving it, the server obtains UAP information of the client according to the UAP-related information contained in the request message, customizes contents desired by the client according to this information, and then sends the customized contents to the client.

At preset, a variety of commercially available clients satisfy personalized requirements quite well. However, the diversity of the clients causes great differences in client capabilities, such as screen size, color, and font. Even the same device may change dynamically in its capabilities, for example, camera may be attached or blue-tooth capability may be updated due to different selection mode. Moreover, the capabilities may be changed dynamically depending on user preferences, such as how to set fonts, whether to receive pictures on a web page, and the like. In order that the client can present proper services provided by the network, such as web pages as browsed and Multimedia Message Services (MMS), and that the server can most efficiently utilize the capabilities provided by the client, a method for displaying and exchanging UAP between the client and the server is provided, including: reporting, by the client, the variation in its capabilities to the server, and providing, by the server, contents according to the device's updated capabilities as shown in Fig. 3, so that the server can customize the contents according to the client's capabilities and provide the customized contents to users in such a manner that they are most satisfied.

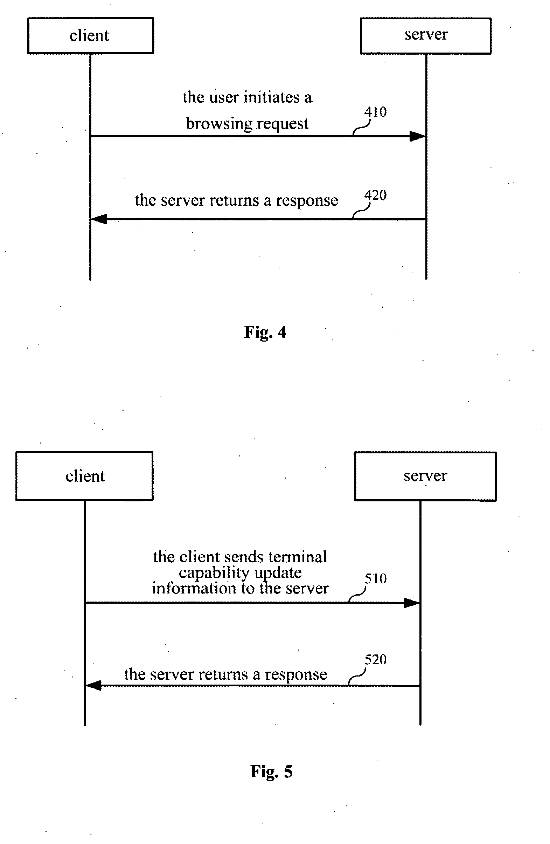

Fig. 4 shows a flow of establishing a connection between the client and the server. In step 410, the client initiates a request to the server, and, at this time, the client establishes a session with the server. The client incorporates into the session request UAP-related information, which is typically a Uniform Resource Locator (URL) for the UAP. The server initiates, according to the URL for the UAP, a request for the UAP, to a UAP storage server and thus obtains the UAP.

In step 420, the server returns response information to the client. If the server can properly process the UAP information, then the server returns UAP information "OK", otherwise, the server returns an error code.

This flow occurs during the establishment of the connection between the client and the server. The client maintains a session with the server until the server or the client disconnects the connection. During such a process, the server may cache the client's UAP information.

Fig.5 shows a UAP update flow when the client changes in its capabilities. In step 510, the client sends a message indicating that the capabilities have been updated to the server. In step 520, the server updates the locally cached device capability information according to the information contained in the capability update notification reported by the client, and returns a response message to the client.

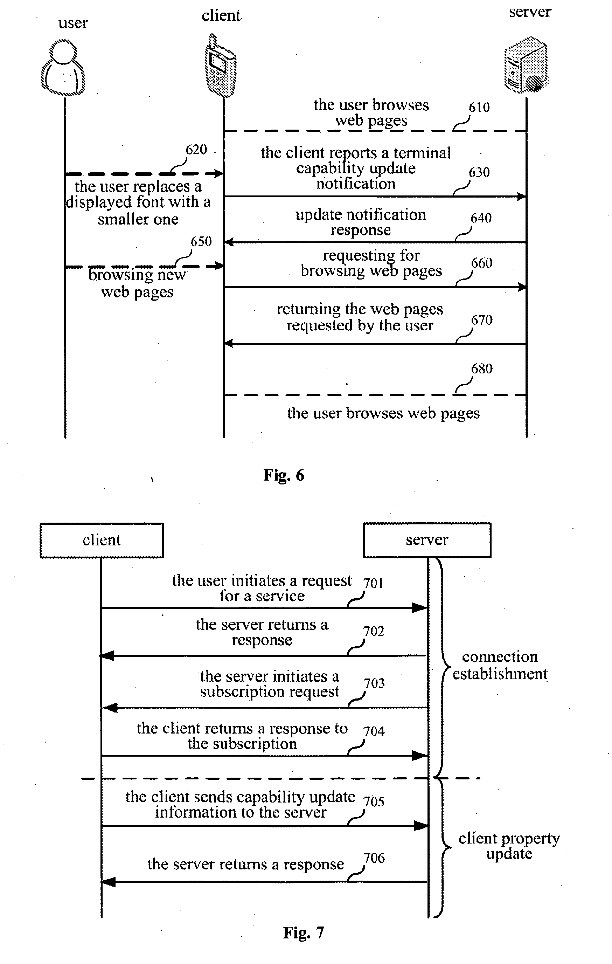

Fig. 6 shows a device capability update flow in the case that the client browses web pages, which may be divided into three stages: web page browsing stage, device capability update stage, and web page browsing stage after device capability updating.

At the web page browsing stage, the user initiates webpage browsing and is currently browsing some interesting contents. At this time, the server has obtained this user's device capability information and can customize the contents, so as to optimally adapt the contents to the client capabilities, as shown in step 610.

At the device capability update stage, the user replaces a displayed font with a smaller one, so that the client changes in its capabilities. The client then notifies the updated device capability to the server. The server updates the locally cached device capability information according to the information contained in the capability update notification reported by the client, and returns a response message to the client, as shown in steps 620 to 640.

At the web page browsing stage after device capability updating, the user continues to browse other web pages, the client initiates a new request for web page browsing to the server, and the server then, according to the updated device capability information, customizes the contents and sends the customized contents to the client, as shown in steps 650 to 680.

In practical applications, there is unnecessary traffic between the client and the server, thereby laying an increased burden on the server.

In the related art UAP update flows, any variation in the client needs to be reported to the server. After receiving a device capability update notification, the server updates the locally cached device capability information according to the information contained in the capability update notification, and returns a response message to the client. In making the present invention, the inventors noticed that, in practical applications, reporting client updated capabilities that do not actually affect current operations would uselessly increase network traffic. Moreover, the server or WAP gateway would be degraded in its performance due to its processing of such irrelevant capability update requests.
US 2004/043763 A1 (MINEAR BRIAN [US] ET AL MINEAR BRIAN [US] ET AL) 4 March 2004 (2004-03-04) discloses a system, method, and computer program for delivering services to wireless communication devices. The system tailors the services based on the capability of the wireless device and the services subscribed by the user. A server or other computer device receives from the wireless device capability data, or "flags," indicating the capability of the device to access data or download and receive applications provided over the network.

### Summary of the Invention

It is an object of the present invention to provide a method and system for reporting device capability update information, allowing a client to selectively update and report their capabilities, thereby reducing the traffic between the client and a server as well as alleviating the burden on the server.

Embodiments of the present invention provide a method for reporting device capability update information. The method includes:
receiving, by a client, a subscription request for subscribing properties of device capabilities that are determined and sent by a server, based on a service requested by the client; and
returning a response to the subscription request, when detecting the updated device capabilities to which the server subscribes, for reporting the device capabilities update information to the server.

The device capabilities are at least one of User Agent Profile properties and user terminal capability properties.

Embodiments of the present invention further provide a method for obtaining device capability update information, including:
receiving by a server a service request sent by a client;
determining device capabilities related to the requested service;
sending a subscription request from a server to the client for subscribing properties of the device capabilities; and
customizing the requested service according to updated device capabilities information returned by the client.

The device capabilities are at least one of user agent profile properties and user terminal capability properties.

The method for obtaining device capability update information further includes:
determining whether the user agent profile related information is carried in the service request sent by the client; if the user agent profile related information is carried;
obtaining the user agent profile properties according to the service request;
determining user agent profile properties related to the requested service; and
generating a subscription request for subscribing the user agent profile properties.

Moreover, the method for obtaining device capability update information includes: updating locally cached device capabilities information according to the updated device capabilities returned by the client.

Further, the method for obtaining device capability update information includes: initiating a new subscription request for subscribing changed properties of device capability related to the new service, in response to the service provided by the server has been changed.

Furthermore, the method for obtaining device capability update information includes: replacing the original subscription request with the new subscription request.

Embodiments of the present invention also provide a system for reporting device capability update information. The system includes:
a client, configured to communicate with a server, comprising:
a subscription determination unit, at the server, configured to determine device capabilities related to a service provided by the server, and to subscribe to properties of the capabilities from the client; and
a subscription management unit, at the client, configured to detect the updated capabilities related to the subscription, and to feed back to the server the capabilities update information subscribed to by the server.

More preferably, the subscription determination unit initiates a new subscription request for subscribing changed properties of device capability related to the new service, in response to the service provided by the server has been changed, and replaces the original subscription request with the new subscription request.

In comparison with the related art, embodiments of the present invention provide a technical solution in which the mechanism of subscription/notification is added to the updating and reporting of device capabilities, and the server subscribes to only the client's User Agent Profile (UAP) properties related to the service. Accordingly, the client only needs to report some of UAP updates that are subscribed to by the server while omitting a large number of UAP updates to which are not subscribed, thereby reducing the traffic between the client and the server. Also, the server only needs to process the UAP updates that may affect its service while omitting a large number of irrelevant UAP update requests, thereby alleviating the burden on the server and improving the performance of the server. As a result of less UAP updates being reported, a WAP gateway needs to process less information, allowing the WAP gateway to have access to an increased number of clients. The present invention has significant effects particularly in the case that the client's UAP properties change frequently.

With the function of managing the subscriptions, a single client may accept subscriptions from a plurality of servers, with each server requesting one or more subscriptions.

If the service provided on the server side is changed, the server again initiates a subscription flow, so that the client may timely update the types of UAP properties to be reported, thereby meeting various service demands on the clients.

### Brief Description of the Drawings

Fig.1 is a structural diagram of a wireless network according to the related art;

Fig. 2 is a structural diagram of a wireless network provided with a WAP gateway according to the related art;

Fig. 3 is a schematic diagram illustrating that a client reports its own updated properties according to the related art;

Fig. 4 is a flow diagram illustrating that a client requests to establish a connection with a server according to the related art;

Fig. 5 is a flow diagram illustrating that a client initiates capability variation information to a server according to the related art;

Fig. 6 is a flow diagram illustrating that a client initiates capability update information to a server when browsing web pages according to the related art;

Fig. 7 is a schematic diagram illustrating a method for reporting device capability update information according to an embodiment of the present invention;

Fig. 8 is a structural diagram illustrating a system for reporting device capability update information according to an embodiment of the present invention;

Fig. 9 is a flow diagram illustrating a method for reporting device capability update information according to a first embodiment of the present invention; and

Fig. 10 is a flow diagram illustrating a method for reporting device capability update information according to a second embodiment of the present invention.

### Detailed Description of the Embodiments

The purposes, technical solutions and advantages of the present invention will become more apparent from the following detailed description by reference to the drawings.

The following embodiments will be described with respect to the update of device capabilities. However, the method provided in the present invention may also be applied to the update of other properties.

As illustrated in Fig. 7, in the present embodiment, a method for reporting device capabilities update information is as follows.
In step 701, a user initiates a service request, i.e., a client where the user is located sends a message to a server, requesting for a service provided by the server.
In step 702, after receiving the service request initiated by the user, the server returns a response message to the client.
In step 703, the server determines device capabilities related to the provided service, and subscribes to properties of the device capabilities from the client.
In step 704, the client receives and manages the subscription request from the server, and returns a corresponding response message to the server.

The above steps 701 to 704 constitute a stage of establishing a connection between the client and the server.

When detecting that its own capabilities have been updated, the client firstly determines whether or not the properties of the updated capabilities are subscribed to by the server. If the properties of the updated capabilities are subscribed to by the server, the flow proceeds to step 705, otherwise, they will be ignored.

In step 705, the client sends to the server a notification message containing the updated values of the properties.

In step 706, the server updates the locally cached device capability information according to the information contained in the notification message, and returns a corresponding response message to the client. The steps 705 to 706 constitute a flow for updating the device capabilities information.

It is understood that, the reporting of UAP property information, including hardware platform information, software platform information, browser client, network characteristic and WAP characteristic, etc, can also be implemented in a similar manner to the above embodiment through the use of the method provided in the present invention, and thus will not be described in detail herein.

According to an embodiment of the present invention, the mechanism of subscription/notification is added to the updating and reporting of device capabilities (such as UAP properties), and the server subscribes to only the client's User Agent Profile (UAP) properties related to the service provided by the server. Accordingly, the client only needs to report some of UAP updates that are subscribed to by the server while omitting a large number of UAP updates that are not subscribed to, thereby reducing the traffic between the client and the server. Also, the server only needs to process the UAP updates that may affect its service while omitting a large number of irrelevant UAP update requests, thereby alleviating the burden on the server and improving the performance of the server.

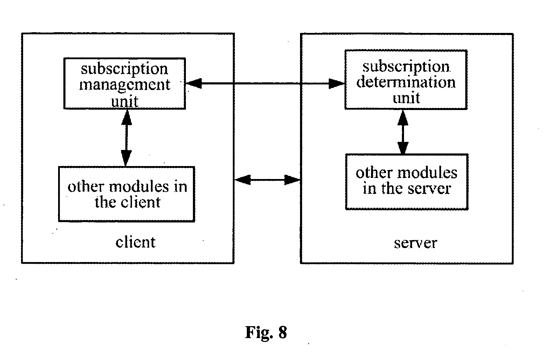

As shown in Fig. 8, the system for reporting device capability update information according to an embodiment of the present invention includes a client and a server. The server further includes a subscription determination unit, and the client further includes a subscription management unit.

The subscription determination unit at the server is configured to determine the client's capabilities related to a service provided by the server, and to subscribe to properties of such capabilities to the client. Specifically, the subscription determination unit in the server is responsible for determining the capabilities and setting parameters of the UE related to the service provided by the server, and to initiate to the client a request for subscribing to these properties, requesting to report these properties to the server once they have been updated, so that the server may be able to send proper contents to the client.

The subscription management unit at the client is configured to manage the subscription from the server, and to notify the server once the properties subscribed to by the server have been updated. Specifically, the subscription management unit in the client is responsible for processing the subscription requests from the server, is required to distinguish sessions from different servers and maintain subscription requests in each session, and is able to initiate a notification message once other modules detect that device capability have been updated, and report the notification message to the server.

Embodiments of the present invention provide a server, which includes a subscription determination unit configured to determine device capabilities related to a service provided by the server, and to subscribe to properties of the device capabilities from the client.

Embodiments of the present invention also provide a terminal, which includes a subscription management unit configured to manage the subscription from the server, to detect related device capabilities corresponding to the properties, and to feed back to the server the device capabilities variation information subscribed to by the server.

Therefore, the principle of the present invention and the system thereof have been explained above. One embodiment of the present invention based on the above system will be explained in detail below.

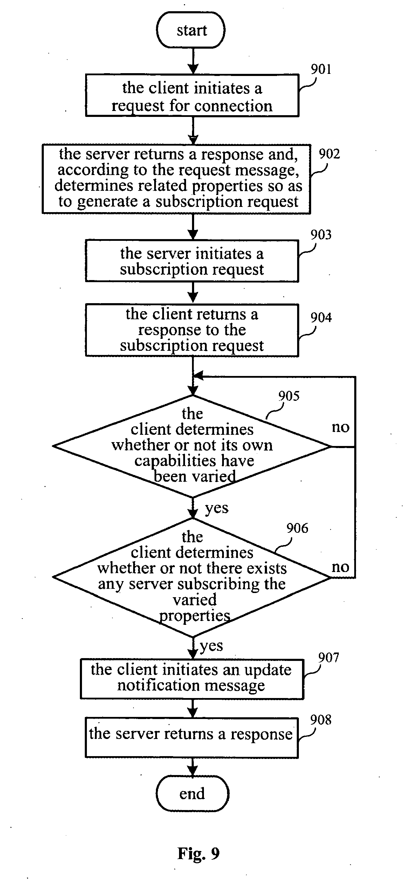

As illustrated in Fig. 9, in the first embodiment of the present invention, the method for re-porting device capability update information is as follows.

In step 901, a client initiates a request for connection. Specifically, when a user at a client demands for a certain service, the client sends a connection request message, requesting for a service provided by the server. For example, if the user wishes to browse web pages, the client where he or she is located sends to the server a browsing request. The client in this embodiment may be a mobile terminal, a fixed terminal, a personal computer, or other devices required to report updated capabilities.

In step 902, the server returns a response and, according to the request message, determines related device capabilities based on the service, and subscribes to properties of the device capabilities, so as to generate a subscription request.

Specifically, after receiving the connection request message, the server firstly determines whether or not the request message carries device capability information, such as the UAP-related information. If the request message does not carry UAP-related information, it means that the client does not support UAP, and the server returns a response directly. If, however, the request message carries UAP-related information, it means that the client supports UAP, and the server attempts to obtain the UAP information according to the request message. If the server fails to obtain the UAP information, the server returns a response indicating that it does not support UAP; and if the server succeeds to obtain the UAP information, it means that the server supports UAP, and the server returns a response to the client, also, the subscription determination unit in the server determines UAP properties related to the provided service, that is to say, determines the client's capabilities related to the requested service and generates a subscription request for subscribing to properties of the capabilities. For example, if the service provided by the server is related only to the client's screen size, bit per pixel and color, the subscription determination unit in the server generates a request for subscribing to the client's screen size, bit per pixel and color.

In step 903, the subscription determination unit in the server initiates a subscription request. Specifically, the subscription determination unit in the server sends to the client the subscription request generated in step 902, requesting that the client report these subscribed properties to the server once they have been updated, so that the server may send proper contents to the client.

In step 904, the client returns a response to the subscription request. Specifically, after the client receives a subscription request from the server, the subscription management unit in the client stores and processes the subscription request. If the client succeeds to process the subscription request, it sends a response message to the subscription determination unit in the server indicating that the subscription is successful; and if the client fails to process the subscription request, it sends a response message to the subscription determination unit in the server indicating that the subscription is unsuccessful. Because the client may have established connections with a plurality of servers or have established various types of connections with a single server, the subscription management unit is requested to distinguish subscription requests from different servers and maintain them as well as different subscription requests from a single server. It can be seen that the steps 901 to 904 correspond to the steps 701 to 704 and constitute a stage of establishing a connection.

In step 905, the client detects whether or not its own capabilities have been updated. Specifically, the subscription management unit in the client detects at any time whether or not its own device capabilities or user preferences have been updated by means of other modules in the client. If the client's certain capabilities have been updated due to device status or user settings, the flow proceeds to step 906 to check whether there exists any server subscribing to these updated capabilities, and if none of the client's capabilities has been updated, the flow returns to step 905 and continues to detect the client's updated capabilities.

In step 906, the subscription management unit in the client checks whether there exists any server subscribing to these updated capabilities. If there exists such a server, the flow proceeds to step 907, and returns to step 905 to continue to detect the client's updated capabilities if there exists no such server. In step 905, for example, the client detects that screen size, bit per pixel and keyboard property have been updated. In the above case, the server subscribes to the client the client's screen size, bit per pixel and color. As a result, the subscription management unit in the client is able to check the server that subscribes to screen size and bit per pixel, and the flow proceeds to step 907.

In step 907, the client initiates an update notification message. Specifically, the client informs the updated capabilities to the server that subscribes to those properties of the updated capabilities through the update notification message, so that the server may send proper contents to the client. In the above case, the client sends to the server the update notification message notifying that screen size and bit per pixel have been updated. If the client's updated capability properties are subscribed to by a plurality of servers, the client needs to send the update notification message respectively to each server subscribing to such properties.

In step 908, the server returns a response. Specifically, after receiving the update notification message, the server updates the locally cached device capability information according to the information contained in the notification message, and returns a response message to the client. Thereafter, the server customizes contents according to the device capability update information and sends the customized contents to the client. The above steps 905 to 908 correspond to the steps 705 to 706 and constitute a device capability update stage.

In this case, the client has access to the server at the network side via a WAP gateway. The communications between the subscription determination unit in the server and the subscription management unit in the client may be implemented by means of Session Initiation Protocol (SIP) or other interactive protocols. In this embodiment, the server subscribes to the properties related to the service currently operated on the client. When a large number of properties unrelated to the service currently operated on the client are updated, the client does not need to report such updates to the server, thereby significantly reducing the traffic between the client and the server. Thus, the server only needs to process the UAP updates that may affect its service while omitting a large number of irrelevant UAP update requests, thereby alleviating the burden on the server and improving the performance of the server. Also, the WAP gateway needs to process less information, allowing the WAP gateway to have access to an increased number of clients.

Similar to the first embodiment, a second embodiment of the present invention takes into account the case in which the service provided by the server is updated.

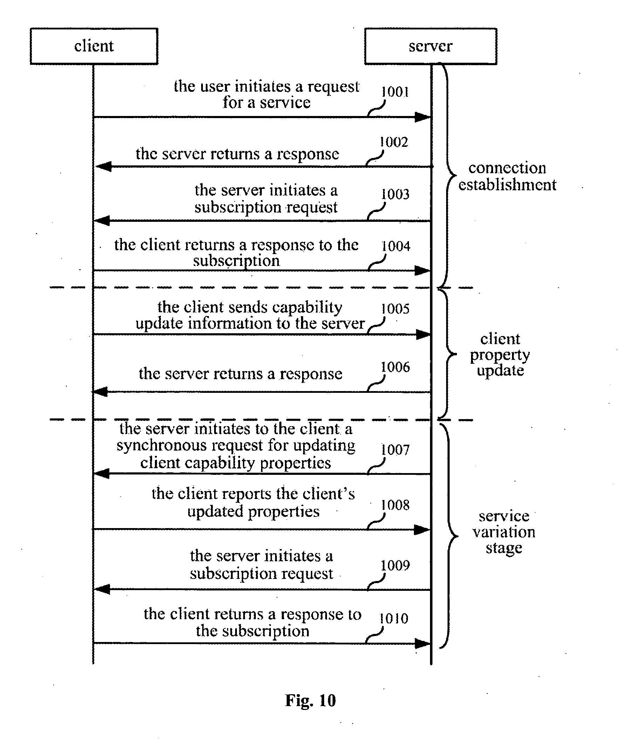

As illustrated in Fig 10, in the second embodiment of the present invention, the method for reporting device capability update information is as follows.

The steps 1001 to 1006 correspond to the steps 701 to 706.

In step 1007, once the service provided by the server has been changed, the server needs to initiate to the client a synchronous request for updating device capability.

In step 1008, the client reports its updated properties, i.e., the properties related to the new service, to the server.

In step 1009, the server initiates a subscription request. Specifically, the subscription determination unit in the server determines the properties related to the new service, and initiates again the subscription request. For example, the service originally provided by the server is related only to the device's screen size, bit per pixel and color, whereas the new service is related only to the device's text input capability support and image capability support. The subscription determination unit in the server then initiates a new subscription request for subscribing to the client's text input capability support and image capability support.

In step 1010, the client returns a response to the subscription. Specifically, after receiving the new subscription request initiated from the subscription determination unit in the server, the subscription management unit in the client replaces the previous subscription request with this new subscription request, and returns a response message to the subscription determination unit in the server. In the above case, the subscription management unit in the client replaces the previous request for subscribing to such properties as screen size, bit per pixel and color with the new request for subscribing to such properties as text input capability support and image capability support, and returns a response message to the subscription determination unit in the server. Thereafter, the client sends an update notification message to the server when text input capability support and image capability support are updated.

While the present invention has been illustrated and described by reference to some exemplary embodiments, the present invention is not limited to these.

## Claims

1. A method for reporting device capability update information, comprising:
receiving, by a client, a subscription request for subscribing properties of device capabilities that are determined and sent by a server, based on a service requested by the client (703); and
returning a response to the subscription request, when detecting the updated device capabilities to which the server subscribes, for reporting the device capabilities update information to the server (704 and 705).

2. The method according to claim 1, wherein the device capabilities are at least one of user agent profile properties and user terminal capability properties.

3. A method for obtaining device capability update information, comprising:
receiving by a server a service request sent by a client (701);
determining device capabilities related to the requested service;
sending a subscription request from the server to the client for subscribing properties of the device capabilities (703); and
customizing the requested service according to updated device capabilities information returned by the client (706).

4. The method according to claim 3, wherein the device capabilities are at least one of user agent profile properties and user terminal capability properties.

5. The method according to claim 4, further comprising:
determining whether the user agent profile related information is carried in the service request sent by the client; if the user agent profile related information is carried;
obtaining the user agent profile properties according to the service request;
determining user agent profile properties related to the requested service; and
generating a subscription request for subscribing the user agent profile properties.

6. The method according to claim 4, further comprising: updating locally cached device capabilities information according to the updated device capabilities returned by the client.

7. The method according to claim 4, further comprising: initiating a new subscription request for subscribing changed properties of device capability related to the new service, in response to the service provided by the server has been changed.

8. The method according to claim 7, further comprising: replacing the original subscription request with the new subscription request.

9. A system for reporting device capability update information, comprising:
a client, configured to communicate with a server, comprising:
a subscription determination unit, at the server, configured to determine device capabilities related to a service provided by the server, and to subscribe to properties of the capabilities from the client; and
a subscription management unit, at the client, configured to detect the updated capabilities related to the subscription, and to feed back to the server the capabilities update information subscribed to by the server.

10. The system according to claim 9, wherein the device capabilities are at least one of User Agent Profile properties and user terminal capability properties.

11. The system according to claim 9, wherein subscription requests managed by the subscription management unit are from one or more servers, each server requesting one or more subscriptions.

12. The system according to claims 9, wherein the subscription determination unit initiates a new subscription request for subscribing changed properties of device capability related to the new service, in response to the service provided by the server has been changed.

13. The system according to claim 12, wherein the subscription determination unit replaces the original subscription request with the new subscription request.

## Patentansprüche

1. Ein Verfahren zum Berichten von Aktualisierungsinformationen über Gerätefähigkeiten, umfassend:
Empfangen, durch einen Client, einer Abonnement-Anforderung zum Abonnieren von Eigenschaften von Gerätefähigkeiten, die auf der Grundlage eines von dem Client (703) angeforderten Dienstes von einem Server bestimmt und gesendet werden; und
Zurücksenden einer Antwort auf die Abonnement-Anforderung zum Berichten der Aktualisierungsinformationen über Gerätefähigkeiten an den Server (704 und 705), wenn die aktualisierten Gerätefähigkeiten, die der Server abonniert, detektiert werden.

2. Das Verfahren nach Anspruch 1, wobei die Gerätefähigkeiten mindestens eines von User-Agent-Profile-Eigenschaften und Benutzerendgerät-Fähigkeitseigenschaften sind.

3. Ein Verfahren zum Gewinnen von Aktualisierungsinformationen über Gerätefähigkeiten, umfassend:
Empfangen einer von einem Client (701) gesendeten Dienstanforderung durch einen Server;
Bestimmen den angeforderten Dienst betreffender Gerätefähigkeiten;
Senden einer Abonnement-Anforderung von dem Server an den Client zum Abonnieren von Eigenschaften der Gerätefähigkeiten (703); und
Anpassen des angeforderten Dienstes gemäß von dem Client (706) zurückgegebenen aktualisierten Informationen über Gerätefähigkeiten.

4. Das Verfahren nach Anspruch 3, wobei die Gerätefähigkeiten mindestens eines von User-Agent-Profile-Eigenschaften und Benutzerendgerät-Fähigkeitseigenschaften sind.

5. Das Verfahren gemäß Anspruch 4, ferner umfassend:
Bestimmen, ob die User-Agent-Profile-bezogenen Informationen in der von dem Client gesendeten Dienstanforderung übertragen werden; falls die User-Agent-Profile-bezogenen Informationen übertragen werden;
Gewinnen der User-Agent-Profile-Eigenschaften gemäß der Dienstanforderung;
Bestimmen der den angeforderten Dienst betreffenden User-Agent-Profile-Eigenschaften; und
Erzeugen einer Abonnement-Anforderung zum Abonnieren der User-Agent-Profile-Eigenschaften.

6. Das Verfahren gemäß Anspruch 4, ferner umfassend: Aktualisieren lokal zwischengespeicherter Informationen über Gerätefähigkeiten gemäß den von dem Client zurückgesendeten aktualisierten Gerätefähigkeiten.

7. Das Verfahren gemäß Anspruch 4, ferner umfassend: Initiieren einer neuen Abonnement-Anforderung zum Abonnieren veränderter Eigenschaften von Gerätefähigkeiten bezüglich des neuen Dienstes als Antwort darauf, dass der von dem Server bereitgestellte Dienst geändert wurde.

8. Das Verfahren gemäß Anspruch 7, ferner umfassend: Ersetzen der ursprünglichen Abonnement-Anforderung mit der neuen Abonnement-Anforderung.

9. Ein System zum Berichten von Aktualisierungsinformationen über Gerätefähigkeiten, umfassend:
einen Client, der dazu konfiguriert ist, mit einem Server zu kommunizieren, umfassend:
eine Abonnement-Bestimmungseinheit bei dem Server, die dazu konfiguriert ist, einen von dem Server bereitgestellten Dienst betreffende Gerätefähigkeiten zu bestimmen und Eigenschaften der Fähigkeiten von dem Client zu abonnieren; und
eine Abonnement-Verwaltungseinheit bei dem Client, die dazu konfiguriert ist, die das Abonnement betreffenden aktualisierten Fähigkeiten zu detektieren und die von dem Server abonnierten Aktualisierungsinformationen über Fähigkeiten dem Server zurückzuspeisen.

10. Das System nach Anspruch 9, wobei die Gerätefähigkeiten mindestens eines von User-Agent-Profile-Eigenschaften und Benutzerendgerät-Fähigkeitseigenschaften sind.

11. Das System nach Anspruch 9, wobei von der Abonnement-Verwaltungseinheit verwaltete Abonnement-Anforderungen von einem oder mehreren Servern stammen, wobei jeder Server ein oder mehrere Abonnements anfordert.

12. Das System nach Anspruch 9, wobei die Abonnement-Bestimmungseinheit als Antwort darauf, dass der von dem Server bereitgestellte Dienst geändert wurde, eine neue Abonnement-Anforderung zum Abonnieren veränderter Eigenschaften von Gerätefähigkeiten bezüglich des neuen Dienstes initiiert.

13. Das System nach Anspruch 12, wobei die Abonnement-Bestimmungseinheit die ursprüngliche Abonnement-Anforderung mit der neuen Abonnement-Anforderung ersetzt.

## Revendications

1. Procédé pour rapporter des informations de mise à jour de capacités de dispositif, comprenant les étapes consistant à :
recevoir, via un client, une demande de souscription pour souscrire à des propriétés de capacités de dispositif qui sont déterminées et envoyées par un serveur, sur la base d'un service demandé par le client (103) ; et
renvoyer une réponse à la demande de souscription, lors de la détection des capacités de dispositif mises à jour auxquelles le serveur a souscrit, pour rapporter les informations de mise à jour de capacités de dispositif au serveur (704 et 705).

2. Procédé selon la revendication 1, dans lequel les capacités de dispositif sont au moins des propriétés parmi des propriétés de profil d'agent utilisateur et des propriétés de capacité de terminal utilisateur.

3. Procédé pour obtenir des informations de mise à jour de capacités de dispositif, comprenant les étapes consistant à :
recevoir, via un serveur, une demande de service envoyée par un client (701) ;
déterminer des capacités de dispositif associées au service demandé;
envoyer une demande de souscription depuis le serveur vers le client pour souscrire à des propriétés de capacités de dispositif (703) ; et
personnaliser le service demandé selon des informations de capacités de dispositif mises à jour renvoyées par le client (706).

4. Procédé selon la revendication 3, dans lequel les capacités de dispositif sont au moins des propriétés parmi des propriétés de profil d'agent utilisateur et des propriétés de capacité de terminal utilisateur.

5. Procédé selon la revendication 4, comprenant en outre les étapes consistant à :
déterminer si les informations liées au profil d'agent utilisateur sont contenues dans la demande de service envoyée par le client ; et si les informations liées au profil d'agent utilisateur sont contenues :
obtenir les propriétés de profil d'agent utilisateur selon la demande de service ;
déterminer des propriétés de profil d'agent utilisateur associées au service demandé ; et
générer une demande de souscription pour souscrire aux propriétés de profil d'agent utilisateur.

6. Procédé selon la revendication 4, comprenant en outre : la mise à jour des informations de capacités de dispositif mises en mémoire cache localement selon les capacités de dispositif mises à jour renvoyées par le client.

7. Procédé selon la revendication 4, comprenant en outre : l'émission d'une nouvelle demande de souscription pour souscrire à des propriétés modifiées de capacités de dispositif associées au nouveau service, en réponse au changement du service fourni par le serveur.

8. Procédé selon la revendication 7, comprenant en outre : le remplacement de la demande de souscription d'origine par la nouvelle demande de souscription.

9. Système pour rapporter des informations de mise à jour de capacités de dispositif, comprenant :
un client, configuré pour communiquer avec un serveur, comprenant :
une unité de détermination de souscription, au niveau du serveur, configurée pour déterminer des capacités de dispositif associées à un service fourni par le serveur, et pour souscrire à des propriétés des capacités à partir du client ; et
une unité de gestion de souscription, au niveau du client, configurée pour détecter les capacités mises à jour associées à la souscription, et pour renvoyer au serveur les informations de mise à jour de capacités souscrites par le serveur.

10. Système selon la revendication 9, dans lequel les capacités de dispositif sont au moins des propriétés parmi des propriétés de profil d'agent utilisateur et des propriétés de capacité de terminal utilisateur.

11. Système selon la revendication 9, dans lequel des demandes de souscription gérées par l'unité de gestion de souscription proviennent d'un ou plusieurs serveurs, chaque serveur demandant une ou plusieurs souscriptions.

12. Système selon la revendication 9, dans lequel l'unité de détermination de souscription émet une nouvelle demande de souscription pour souscrire à des propriétés modifiées de capacités de dispositif associées au nouveau service, en réponse au changement du service fourni par le serveur.

13. Système selon la revendication 12, dans lequel l'unité de détermination de souscription remplace la demande de souscription d'origine par la nouvelle demande de souscription.
